Europäisches Patentamt

European Patent Office

Office européen des brevets

(19)

(11) Veröffentlichungsnummer : **0 143 471**
**B1**

(12) **EUROPÄISCHE PATENTSCHRIFT**

(45) Veröffentlichungstag der Patentschrift :
**14.02.90**

(21) Anmeldenummer : **84114563.4**

(22) Anmeldetag : **30.11.84**

(51) Int. Cl.⁵ : **F 16 C 32/06**

(54) **Gasdrucklager.**

(30) Priorität : **01.12.83 DE 3343470**

(43) Veröffentlichungstag der Anmeldung :
**05.06.85 Patentblatt 85/23**

(45) Bekanntmachung des Hinweises auf die Patenterteilung : **14.02.90 Patentblatt 90/07**

(84) Benannte Vertragsstaaten :
**CH DE FR GB LI**

(56) Entgegenhaltungen :
**EP--A-- 0 065 337**
**EP--A-- 0 071 469**
**DE--A-- 1 965 580**
**DE--A-- 2 544 872**
**DE--A-- 3 010 741**

(73) Patentinhaber : **Firma Carl Zeiss**

**D-7920 Heidenheim (Brenz) (DE)**
**CH DE FR LI**
**CARL ZEISS-STIFTUNG HANDELND ALS CARL ZEISS**

**D-7920 Heidenheim (Brenz) (DE)**
**GB**

(72) Erfinder : **Enderle, Eckhard, Dipl.-Ing. (FH)**
**Hüttlinger Strasse 33**
**D-7080 Aalen (DE)**
Erfinder : **Kaufmann, Dieter**
**Schupfestrasse 6**
**D-7920 Heidenheim 5 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein lastkompensiertes Gasdrucklager zur Konstanthaltung des Lagerspaltes in einem gewissen Lastbereich, mit einer als Membran ausgebildeten nachgiebigen Oberfläche auf der Tragseite des Gasdrucklagers.

Bei verschiedenen Anwendungsbereichen, z. B. der Lagerung von Portalen einer Meßmaschine mittels Gasdrucklagern, ist es wünschenswert, den Lagerspalt, unabhängig von der Belastung des Lagers, konstant zu halten, d. h. es werden Lager mit sehr hoher Steifigkeit benötigt.

In der Patentschrift CH-A-604033 wird ein solches Lager beschrieben. Das bekannte Gasdrucklager enthält eine nachgiebige Tragseite, welche als Membran ausgebildet ist. Diese Membran ist zentral mit dem Grundkörper des Lagers verbunden ; der Membranrand ist gegen den inneren Rand des Lagergehäuses beweglich abgedichtet. Die Gaszuführung erfolgt zentral durch den Mittelpunkt der Membran. Membran und Lagergehäuse bilden auf diese Weise eine innere Lagerkammer. Vor dieser Kammer, innerhalb der zentralen Gaszuführungsleitung, ist eine Drossel (Lagerdüse) angebracht. Hinter der Drossel ist die innere Lagerkammer mittels einer Bohrung mit der Gaszuführungsleitung verbunden. Der Anschlußdruck $P_o$, wird durch die Drossel auf den lastabhängigen Druck $P_L$ reduziert. Der Druck $P_L$ herrscht ebenfalls in der inneren Lagerkammer. Der Gasstrom fließt durch die zentrale Öffnung in der Membran zwischen die Unterseite der Membran und der ihr gegenüberliegenden Lageroberfläche, dem Lagerzwischenraum, und tritt an dem Rand des Lagers wieder aus. Entlang der Membran von der zentralen Gaszuführungsöffnung bis zu den Austrittsöffnungen bildet sich ein Druckabfall aus.

Durch das Zusammenwirken von Lastdruck $P_L$ in der inneren Lagerkammer und dem Druckabfall im Lagerspalt wird der Rand der Membran in Richtung der ihr gegenüberliegenden Lageroberfläche gedrückt. Ihre Form weist in Richtung des Gasstromes eine Konvergenz auf. Jede Zunahme der Belastung in einem gewissen Lastbereich erhöht die Konvergenz der Membran und hebt das Lager an, so daß lastabhängige Verringerungen des Lagerspalts auf diese Weise kompensiert werden.

Auf diese Weise wird eine hohe Steifigkeit in einem gewissen Arbeitsbereich erzielt.

Man kann die Steifigkeit des oben beschriebenen Lagers erhöhen, indem man für eine erhöhte Kompensation des Lagers sorgt. Dies wird dadurch erreicht, daß man die Membranoberfläche, auf der Seite der inneren Lagerkammer größer ausbildet als die führungsseitig wirksame Membranoberfläche.

Man erkauft sich diese erhöhte Kompensation jedoch mit dem Nachteil, daß die Membran eines Lagers mit er höhter Kompensation größer sein muß als die Membran eines einfach kompensierten Lagers, und dadurch wird ebenfalls das Lagergehäuse einen größeren Umfang haben müssen als es von der Tragfläche her eigentlich erforderlich ist. Dies ist jedoch für viele Anwendungsfälle nicht wünschenswert.

Außerdem ist die Wirkung dieses Lagers abhängig von der Druckdifferenz zwischen $P_o$ und $P_L$, die sich über der Lagerdüse (Drossel) ausbildet. Bei hohen Belastungen tritt dieser Druckabfall jedoch nicht mehr auf, so daß die Konvergenz der Membran dann nicht mehr zunimmt und die Steifigkeit des Lagers somit abnimmt.

Aus der EP-A-0 065 337 ist ein Gasdrucklager bekannt, dessen Membran sich über ein ringförmiges Kipplager an dem Lagergrundkörper abstützt. Der aus der Membran, dem Grundkörper und dem Kipplager gebildete Innenraum dieses Lagers ist mit dem Versorgungsdruck beaufschlagt, der durch eine enge Bohrung in der Membran in den Lagerspalt abströmen kann.

Da auch bei diesem Lager die Steifigkeit von der Druckdifferenz zwischen dem Druck im Lagerspalt und dem Druck in der inneren Lagerkammer abhängt, ist die Qualität der Kompensation des Lagers unter hoher Belastung, bei der sich die beiden Drucke aneinander angleichen, geringer. Dem läßt sich nicht durch eine Erhöhung des Arbeitsdruckes begegnen, da ein höherer Arbeitsdruck den Grad der Durchbiegung der Membran und damit die Steifigkeit eher verringert als vergrößert.

Außerdem neigt das bekannte Lager zu Schwingungen, da die Bohrung in der Membran aufgrund ihrer Drosselfunktion relativ klein sein muß.

Es ist Aufgabe der vorliegenden Erfindung, ein last-kompensiertes Gasdrucklager hoher Steifigkeit zu entwickeln, mit welchem eine erhöhte Kompensation erzielt werden kann, ohne die Membranflächen und damit die Dimensionen des Lagergehäuses verändern zu müssen.

Diese Aufgabe wird durch die Maßnahmen gelöst, wie sie im kennzeichnenden Teil des Hauptanspruches aufgeführt wird.

Die Wirkungsweise des erfindungsgemäßen Lagers besteht darin, daß bei der konkaven Ausbildung der Membranoberfläche infolge steigender Belastung eine Hebelwirkung zwischen Membranbefestigung und Membranrand auftritt, wodurch das Lager im ganzen angehoben wird. Über diese Hebelwirkung wird die Verringerung des Lagerspalts kompensiert. Da die inner Lagerkammer belüftet ist, wird eine stärkere Durchbiegung der Membran erreicht als bei dem bekannten Drucklager, denn die Druckdifferenz zwischen dem Lagerspalt und der inneren Lagerkammer wird bei Lasterhöhung nicht in dem Maße abgebaut, wie bei der bekannten Lösung. Damit ist die Steifigkeit des erfindungsgemäßen Drucklagers gegenüber dem Bekannten erhöht.

Außerdem ist das erfindungsgemäße Lager tragfähiger, da die wirksame Fläche auf der Tragseite der Membran durch die Kompensation nicht beschnitten wird.

Eine weitere Erhöhung der Kompensation wird bei dem erfindungsgemäßen Drucklager in einfacher Weise dadurch bewirkt, daß der Randbereich der Membran mit dem Lastdruck $P_L$ beaufschlagt und damit die Biegung des Membranrandes verstärkt wird. Der Lagerzwischenraum bleibt weiterhin belüftet. Man spricht in diesem Fall von einem Gasdrucklager erhöhter Kompensation. Das Gehäuse des Lagers kann in seinen Abmessungen unverändert bleiben. Es sind lediglich eine zusätzliche Bohrung und eine zusätzliche Dichtung notwendig, für die der Grundkörper schon vorbereitet sein kann, die aber erst im Bedarfsfall eingesetzt zu werden brauchen.

Man kann die Kompensation neben der erstgenannten Art auch dadurch steigern, daß man den Lagerzwischenraum auf einen niedrigeren Druck als Atmosphärendruck bringt und damit die Membran im Bereich zwischen der Gaseinlaßöffnung und dem Steg, auf dem die Membran aufliegt, verstärkt konkav verbiegt. Durch zusätzliche Variation des Druckes im Lagerzwischenraum kann die Steifigkeit des Drucklagers gesteuert werden, oder es können unerwünschte Schwingresonanzen ausgelöscht werden. Die beiden beschriebenen Arten, die Kompensation des Lagers zu erhöhen, können jede für sich, oder auch kombiniert angewandt werden.

Im folgenden ist ein Ausführungsbeispiel der Erfindung anhand der Figuren 1, 2, 3 und 4 der beigefügten Zeichnungen näher erläutert.

Die Figuren sind im einzelnen:

Fig. 1a eine Prinzipskizze eines lastkompensierten Drucklagers im unbelasteten Zustand, dargestellt im Querschnitt;

Fig. 1b eine detailliertere Darstellung der Auflage der Membran des Lagers aus Fig. 1;

Fig. 2 eine Prinzipskizze eines lastkompensierten Drucklagers unter Teilbelastung, dargestellt im Querschnitt

Fig. 3 eine Prinzipskizze eines lastkompensierten Drucklagers mit erhöhter Kompensation, dargestellt im Querschnitt

Fig. 4 eine Kennlinie des erfindungsgemäßen lastkompensierten Drucklagers, nach Fig. 1 bzw. 2.

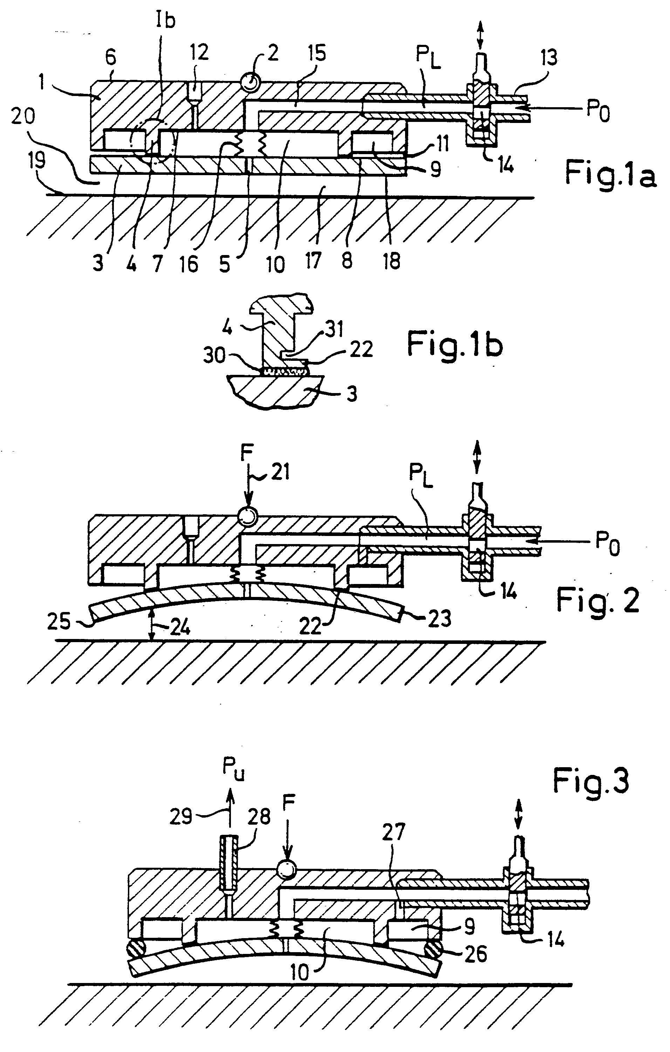

Das in Fig. 1 dargestellte Gasdrucklager besitzt einen Grundkörper 1, welcher auf seiner Oberseite 6 eine Kugel 2 zur Aufnahme der Last und auf seiner Unterseite 7 Aufnahmen und Anschlüsse für die Membran 3 besitzt. Der Grundkörper 1 und die Membran 3 sind kreisförmig ausgebildet. Die Membran 3 ist an dem Steg 4 durch eine gasdichte Klebeverbindung 30 befestigt. Der Steg 4 ist wie der kreisförmige Grundkörper 1 ringförmig ausgebildet. An der Verbindungsstelle mit der Membran 3 ist der Steg 4 breitflächig ausgebildet, so daß eine flächige Klebeverbindung 30 erzielt wird, wie dies in Fig. 1b dargestellt ist. Zum Grundkörper 1 hin schließt sich an der Klebeverbindung 30 eine einstichartige Einschnürung 31 an. Diese sorgt für eine Erhöhung der Biegefähigkeit des Steges 4, so daß der Steg 4 mit seiner Einschnürung 31 und der Klebefläche 30 als Kipplager 22 wirkt. In der Mitte der Membran 3 befindet sich eine Bohrung als Gaszuführungsöffnung 5. Unterseite 7 und Membranoberseite 8 bilden einen Zwischenraum, der durch den Steg 4 in eine äußere Lagerkammer 9 und eine innere Lagerkammer 10 unterteilt ist. Der äußere Teil 9 ist über die Öffnung 11, der innere Teil 1 ist über die Bohrung 12 belüftet. Das Drucklager wird über den Versorgungsanschluß 13 mit Gas, z. B. Luft, mit dem Druck $P_0$ versorgt. Das Druckmittel gelangt durch die Bohrung 15 im Grundkörper 1, die elastische Abdichtung 16 und die zentrale Gaszuführungsöffnung 5 in den Lagerspalt 17. Der Lagerspalt 17 wird gebildet aus der Membranunterseite 18 und der Führung 19. Am Außenumfang 20 des Lagerspalts 17 tritt das Gas aus dem Lager aus. Zwischen der Zuführungsleitung 13 und dem Lager 1 ist eine Drossel 14 angeordnet, über die der Durchlaß des Druckmittels eingestellt wird.

Hinter der Drossel 14 hat das Gas den lastabhängigen Lagerdruck $P_L$.

Fig. 2 zeigt die Wirkung des Drucklagers unter dem Einfluß einer äußeren Kraft: An der Kugeloberfläche 2 wirkt eine Kraft F in Richtung des Pfeiles 21. Diese Kraft versucht den Lagerspalt 17 zu komprimieren, wodurch sich der lastabhängige Druck $P_L$ im Lagerspalt 17 erhöht.

Durch diese Druckerhöhung wird die Membran 3 in ihrem zentralen Bereich um die Gaszuführungsöffnung 5 konkav durchgebogen. Jetzt bewirkt das Kipplager 22, wo die Membran 3 auf dem Steg 4 aufliegt, daß der äußere Bereich der Membran 3, begrenzt durch den Abstand zwischen dem Hebelgelenk 22 und dem äußeren Rand 23 der Membran 3, in Richtung der Lageroberfläche 19 gedrückt wird. Durch diese Bewegung wird der relative Abstand zwischen der unteren Membranoberfläche 18 und Lageroberfläche 19, dargestellt durch den Doppelpfeil 24, wieder auf den Wert gebracht, den er im unbelasteten Zustand besaß. Der Gasaustritt 20 ist zwar gegenüber dem unbelasteten Zustand in Fig. 1 kleiner geworden. Dies ist durch den Doppelpfeil 25 dargestellt. Im Ergebnis ändert sich der Abstand des Lagers von der Führung 19 insgesamt nicht. Auf diese Weise erhält man ein Lager sehr hoher Steifigkeit.

Fig. 3 zeigt ein Drucklager unter Last, bei dem zwei zusätzliche Maßnahmen der erhöhten Kompensation angewandt sind. Zunächst ist die äußere Lagerkammer 9 durch eine elastische Dichtung 26, z. B. einen Rundschnurring, gegenüber der umgebenden Atmosphäre abgedichtet. Durch die Bohrung 27 wird der lastabhängige Druck $P_L$ in die Kammer 9 geführt. Dadurch wird zusätzlich zu dem Effekt, wie er anhand von Fig. 2 beschrieben wurde, der Membranrand zwischen dem Hebelgelenk 22 und dem Gasauslaß 20 weiter in Richtung der Führung 19 gedrückt.

Als weitere Maßnahme zur Erhöhung der Kompensation kann über den Gasauslaßstutzen 28, der an die Entlüftungsbohrung 12 angeschlossen ist, die Luft aus der inneren Lagerkammer 10 abgesaugt werden, so daß in der inneren Kammer

10 der Druck $P_u$ herrscht, der niedriger ist als der das Lager umgebende Atmosphärendruck. Durch diese weitere Maßnahme wird der innere Teil der Membran 3 zusätzlich in Richtung zur Lagergehäuseunterseite 7 gedrückt und die konkaven Durchbiegung der Membran 3 verstärkt.

Damit erhält man eine weitere Erhöhung der Kompensation. Beide Maßnahmen zur Erhöhung der Kompensation, nämlich Erhöhung des Druckes in der äußeren Kammer 9 und Erniedrigung des Druckes in der inneren Kammer 10, können gleichzeitig oder jede für sich angewandt werden.

Die Figuren 1-3 sind nicht in allen Details maßstäblich gezeichnet. So ist z. B. die Biegung der Membran 3 überhöht dargestellt, damit deren Wirkung deutlich hervorgehoben wird. Auch sind Dichtflächen und Dichtelemente, wie z. B. der Rundschnurring 26, überdimensioniert. Die Biegungen der Membran und damit die Abstände im Lagerzwischenraum bewegen sich in der Größenordnung von µm (etwa 2 bis 10 µm), und entsprechend verhält sich die Biegung der Membran, und ist der Rundschnurring zu dimensionieren.

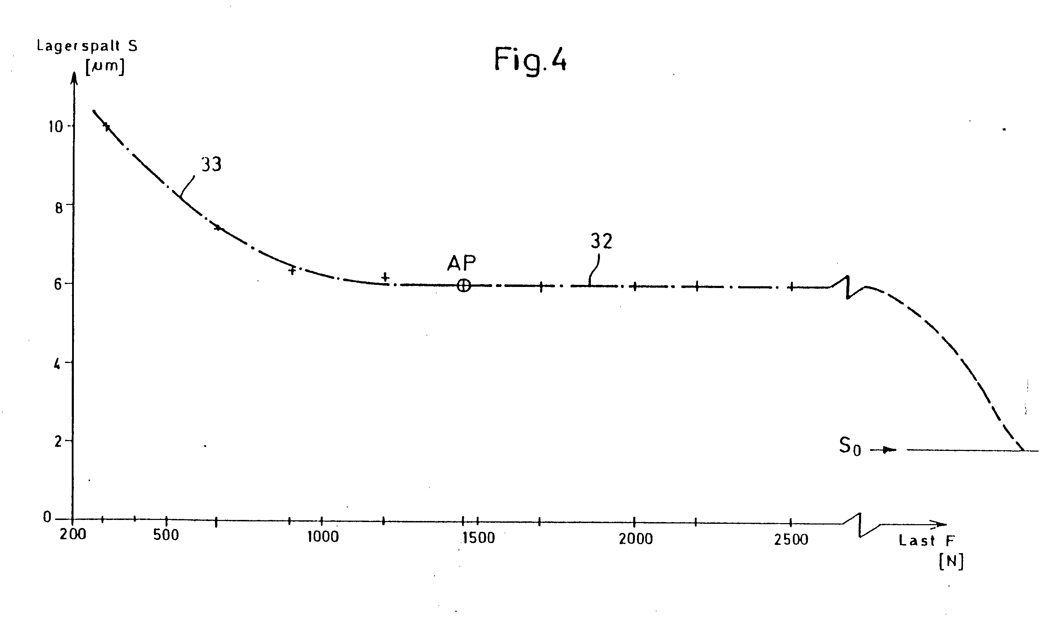

In Fig. 4 ist eine Kennlinie 33 eines erfindungsgemäß ausgeführten lastkompensierten Drucklagers gemäß Figur 1 dargestellt. Auf der Ordinate ist der Lagerspalt S in µm aufgetragen, der sich durch Messung des Abstandes 24 zwischen Unterseite 18 der Membran 3, gemessen unterhalb des Kipplagers 22, und der Lageroberfläche 19 ergibt. Auf der Abszisse ist die einwirkende Kraft F in Newton aufgetragen. Als Arbeitspunkt AP ist $F = 1450$ N mit $S = 6$ µm gewählt. Man erkennt den weiten Bereich 32 unendlich hoher Steifigkeit zwischen $F = 1400$ N und $F = 2500$ N. Bei weiterer Erhöhung der Last ist ein Absinken des Lagers zu erwarten, wodurch der Abstand s bis auf einen Wert $S_0$ absinkt, der dann erreicht ist, wenn der Membranrand 23 auf der Lageroberfläche 19 aufliegt. Dieser Kurvenverlauf ist gestrichelt, jedoch nicht maßstäblich, dargestellt.

Wendet man die im Zusammenhang mit Fig. 3 beschriebenen Maßnahmen einer erhöhten Kompensation an, kann man erreichen, daß sich der waagerechte Bereich 32 der Kennlinie in einen ansteigenden Bereich wandelt. Man erhält dann ein Lager mit negativer Steifigkeit.

Die erfindungsgemäße Ausführung des lastkompensierten Drucklagers wirkt unabhängig davon, ob als Betriebsmedium kompressibles Gas, wie z. B. Luft, eingesetzt wird, oder ob als Betriebsmedium eine nicht-kompressible Flüssigkeit, wie z. B. Wasser oder Öl, benutzt wird. Im vorliegenden Ausführungsbeispiel wurde Luft als Betriebsmedium benutzt.

**Patentansprüche**

1. Gasdrucklager mit einem Lagergehäuse (1), dessen Tragseite als nachgiebige Membran (3) ausgebildet ist, die durch den Lagerdruck ($P_L$) konkav verformt wird, und die sich auf durch einen Steg (4) gebildeten Kipplagern (22), an denen sie befestigt ist und die an ihr jeweils im Abstand von ihrer Außenkante angeordnet sind, am Lagergehäuse (1) abstützt, dadurch gekennzeichnet, daß die durch die Membran (3) und die Unterseite (7) des Lagergehäuses (1) und die Kipplager (4, 22) gebildete Kammer (9, 10) mindestens teilweise belüftet ist.

2. Gasdrucklager nach Anspruch 1, dadurch gekennzeichnet, daß der Steg (4) ringförmig ausgebildet ist und die Lagerkammer zwischen Membran (3) und Grundkörper (1) in einen äußeren Teil (9) und in einen inneren Teil (10) aufteilt.

3. Gasdrucklager nach Anspruch 2, dadurch gekennzeichnet, daß die innere Lagerkammer (10) mit Atmosphärendruck beaufschlagt ist.

4. Gasdrucklager nach Anspruch 2, dadurch gekennzeichnet, daß die die innere Kammer (10) umgebende äußere Lagerkammer (9) mit einer elastischen Dichtung (26) abgedichtet und durch eine Bohrung (27) mit dem lastabhängigen Versorgungsdruck gefüllt wird.

5. Gasdrucklager nach Anspruch 2, dadurch gekennzeichnet, daß die innere Lagerkammer (10) über einen Anschlußstutzen (28) auf einen Druck unterhalb des Atmosphärendruckes gehalten wird.

6. Gasdrucklager nach Ansprüchen 4 und 5, dadurch gekennzeichnet, daß, sowohl die äußere Lagerkammer (9) mit einer elastischen Dichtung (26) abgedichtet und mit dem lastabhängigen Versorgungsdruck gefüllt wird, als auch die innere Lagerkammer (10) über einen Anschlußstutzen (28) auf einem Druck unterhalb des Atmosphärendruckes gehalten wird.

7. Gasdrucklager nach Anspruch 2, dadurch gekennzeichnet, daß die Membran (3) durch eine elastische Klebeverbindung an dem Steg (4) befestigt ist.

8. Gasdrucklager nach Anspruch 7, dadurch gekennzeichnet, daß die Klebeverbindung (30) breitflächig ausgebildet ist, und daß der Steg (4) oberhalb der Klebefläche (30) eine einstichartige Einschnürung (31) zur Erhöhung der Biegefähigkeit des Steges (4) besitzt.

9. Gasdrucklager nach Ansprüchen 1 bis 8, dadurch gekennzeichnet, daß eine Drossel (14) zur Konstanthaltung des Gasstromes außerhalb des Gasdrucklagers angebracht ist.

10. Gasdrucklager nach Ansprüchen 1 bis 9, gekennzeichnet durch seine Verwendung zur Lagerung von Portalen bei Mehrkoordinatenmeßmaschinen.

**Claims**

1. A gas bearing comprising a housing (1) the support side of which is developed as a resilient membrane (3) which is concavely shaped by the bearing pressure ($P_L$), and which rests against the housing via tilt bearings (22) formed by a web (4) on which the membrane is fastened and which tilt bearings are arranged at a distance apart from the outer edge of the membrane (3), characterized by the fact that the chamber (9, 10) formed by the membrane (3), by the bottom (7) of the bearing housing (1), and by the tilt bearings (4, 22) is at least partially vented.

2. A gas bearing according to claim 1, characterized by the fact that the web (4) has a ring-shape and divides the bearing chamber between membrane (3) and bearing base body (1) into an outer part (9) and an inner part (10).

3. A gas bearing according to claim 2, characterized by the fact that the inner bearing chamber (10) is acted on by atmospheric pressure.

4. A gas bearing according to claim 2, characterized by the fact that the outer bearing chamber (9) which surrounds the inner chamber (10) is sealed off by an elastic seal (26) and is filled with the load-dependent supply pressure through a hole (27).

5. A gas bearing according to claim 2, characterized by the fact that the inner bearing chamber (10) is maintained via a connection (28) at a pressure below atmospheric pressure.

6. A gas bearing according to claims 4 and 5, characterized by the fact that the outer bearing chamber (9) is sealed off by an elastic seal (26) and filled with the loaddependent supply pressure and that the inner bearing chamber (10) is maintained via the connection (28) at a pressure below atmospheric pressure.

7. A gas bearing according to claim 2, characterized by the fact that the membrane (3) is fastened to the web (4) by an elastic adhesive connection.

8. A gas bearing according to claim 7, characterized by the fact that the adhesive connection (30) is developed with a broad surface and that the web (4) has a groove-like reduction in area (31) above the adhesive surface (30) in order to increase the bendability of the web (4).

9. A gas bearing according to claims 1 to 8, characterized by the fact that a throttle (14) is arranged outside the gas bearing in order to maintain the flow of gas constant.

10. A gas bearing according to claims 1 to 9, characterized by its use for supporting portals of multiple coordinate measuring machines.

## Revendications

1. Palier à gaz hydrostatique, comprenant un corps de palier (1) dont le côté support est réalisé comme une membrane flexible (3) qui est déformée par la pression du palier ($P_L$) en une forme concave et qui s'appuie sur le corps (1) du palier par des appuis de basculement (22), constitués par une nervure (4) auxquels elle est fixée et qui sont disposés à distance de son bord extérieur, caractérisé en ce que le bassin (9, 10) délimité par la membrane (3) et le côté inférieur (7) du corps (1) du palier, ainsi que les appuis de basculement (20, 22), est raccordé en partie au moins à l'atmosphère.

2. Palier selon la revendication 1, caractérisé en ce que la nervure (4) possède une forme annulaire et divise le bassin entre la membrane (3) et le corps de base (1) du palier en une partie extérieure (9) et une partie intérieure (10).

3. Palier selon la revendication 2, caractérisé en ce que le bassin intérieur (10) reçoit la pression atmosphérique.

4. Palier selon la revendication 2, caractérisé en ce que le bassin extérieur (9), entourant le bassin intérieur (10), est étanché par un joint élastique (26) et reçoit la pression d'alimentation fonction de la charge à travers un orifice (27).

5. Palier selon la revendication 2, caractérisé en ce que le bassin intérieur (10) est maintenu à une pression inférieure à la pression atmosphérique à travers une tubulure de raccordement (28).

6. Palier selon les revendications 4 et 5, caractérisé en ce que le bassin extérieur (9) est étanché par un joint élastique (26) et reçoit la pression d'alimentation fonction de la charge et que, simultanément, le bassin intérieur (10) est maintenu à une pression inférieure à la pression atmosphérique à travers une tubulure de raccordement (28).

7. Palier selon la revendication 2, caractérisé en ce que la membrane (3) est fixée à la nervure (4) par un assemblage collé élastique.

8. Palier selon la revendication 7, caractérisé en ce que l'assemblage collé (30) est réalisé sur une surface de grande largeur et que la nervure (4) possède, au-dessus de la surface de collage (30), un rétrécissement (31) déterminé par une entaille et servant à accroître la flexibilité de la nervure (4).

9. Palier selon les revendications 1 à 8, caractérisé en ce qu'un étranglement (14) pour le maintien du débit gazeux à une valeur constante est disposé à l'extérieur du palier.

10. Palier selon les revendications 1 à 9, caractérisé par son utilisation pour le support de portiques déplaçables de machines de mesure à plusieurs coordonnées.

EP 0 143 471 B1

Fig.1a

Fig.1b

Fig. 2

Fig.3

Fig.4

EP 0 143 471 B1